# EUROPÄISCHE PATENTSCHRIFT

(11) **EP 2 705 466 B1**
(45) Veröffentlichungstag und Bekanntmachung des Hinweises auf die Patenterteilung: **05.09.2018**
(21) Anmeldenummer: 12717743.4
(22) Anmeldetag: 30.04.2012
(51) Int. Cl.: G06K 9/48, G06K 9/68

(54) **VERFAHREN UND VORRICHTUNG ZUM ERKENNEN EINES ZEICHENS**
METHOD AND DEVICE FOR IDENTIFYING A CHARACTER
PROCÉDÉ ET DISPOSITIF DE RECONNAISSANCE D'UN CARACTÈRE

(30) Priorität: 04.05.2011 DE 102011075275
(43) Veröffentlichungstag der Anmeldung: 12.03.2014
(73) Patentinhaber: Bundesdruckerei GmbH, 10969 Berlin (DE)
(72) Erfinder: FRÖHLICH, Martin, 13088 Berlin (DE)
(74) Vertreter: Patentship Patentanwaltsgesellschaft mbH
(86) Internationale Anmeldenummer: PCT/EP2012/057908
(87) Internationale Veröffentlichungsnummer: WO 2012/150211

(56) Entgegenhaltungen:
- SRIKANTAN G ET AL: "Gradient-based contour encoding for character recognition", PATTERN RECOGNITION, ELSEVIER, GB, Bd. 29, Nr. 7, 1. Juli 1996 (1996-07-01), Seiten 1147-1160, XP004007386, ISSN: 0031-3203, DOI: 10.1016/0031-3203(95)00146-8
- SRIKANTAN G ET AL: "GRADIENT-BASED CONTOUR ENCODING FOR GRAYSCALE CHARACTER RECOGNITION", 1. Januar 1993 (1993-01-01), CHARACTER RECOGNITION TECHNOLOGIES. SAN JOSE, FEB. 1 - 2, 1993; [CHARACTER RECOGNITION TECHNOLOGIES], BELLINGHAM, SPIE, US, PAGE(S) 2 - 09, XP000628852, ISBN: 978-0-8194-1139-6 Zusammenfassung

## Beschreibung

Die vorliegende Erfindung betrifft das Gebiet der automatischen Erkennung von Zeichen.

Verfahren zur automatischen Erkennung von Zeichen, insbesondere von Buchstaben und Ziffern, sind seit langem und in vielen Zusammenhängen im Einsatz, beispielsweise im Bereich hoheitlicher Dokumente. Die International Civil Aviation Organization (ICAO) hat beispielsweise in einer Spezifikation für maschinenlesbare Reisedokumente neben einer Lesezone auch die darin zu verwendende Schriftart OCR-B (OCR: Optical Character Recognition), definiert. Diese Schriftart wurde eigens für die automatische Erkennung von Zeichen entwickelt.

Zur Erkennung von Zeichen können Verfahren eingesetzt werden, welche nach einer globalen Strukturanalyse, in welcher Kandidaten für Einzelzeichen ermittelt werden, Klassifikatoren zur Unterscheidung von einzelnen Zeichen verwenden. Anhand der Klassifikatoren können Mustervergleiche, so genannte Pattern-Matchings, durchgeführt werden. Die Vorlagen für einen Mustervergleich stammen üblicherweise aus vordefinierten Zeichensätzen, oder sie werden unter Verwendung von Musterdaten in einer Lernphase trainiert. Darüber hinaus sind Skelettierungsverfahren bekannt, welche das "innere Skelett" eines Zeichens bestimmen und topologische Eigenschaften zur Untersuchung bestimmter Zeichengruppen verwenden.

Die Druckschrift "Srikantan G. et al.: "Gradient-based contour encoding for character recognition", PATTERN RECOGNITION, ELSEVIER, GB, Bd. 29, Nr. 7, 1. Juli 1996 (1996-07-01), Seiten 1147-1160, XP004007386, ISSN: 0031-3203, DOI: 10.1016/0031-3203(95)00146-8" beschreibt ein Verfahren zur Zeichenerkennung.

In den Druckschriften Canny, J., "A Computational Approach to Edge Detection", IEEE Trans. Pattern Analysis and Machine Intelligence, 8(6):679-698, 1986 und Lindberg, T., "Edge Detection and Ridge Detection with Automatic Scale Selection", International Journal of Computer Vision, 30, 2, 107-154, 1998, sind Verfahren zur Erkennung eines Kantenverlaufs eines Zeichens beschrieben, welche Grauwertgradienten verwenden. Die Grauwertgradienten werden als Zwischenergebnis zur Bestimmung des Kantenverlaufs verwendet. Anhand des mittels der Grauwertgradienten bestimmten Kantenverlaufs wird das Zeichen klassifiziert. In der Druckschrift von Holder, S., Dengler, J., "Front- and Size-Invariant Character Recognition with Grey-Value Image Features", Proc. 9th International Conference on Pattern Recognition, 252-254, Vol. 1, 1988, ist ein Verfahren beschrieben, bei dem die Gradientenrichtungen im Konturenverlauf eines Zeichens mit Referenzgradientenrichtungen verglichen werden, um auf der Basis eines Mustervergleichs das Zeichen zu erkennen.

Die bekannten Grauwert-basierten Verfahren zur Erkennung von Zeichen haben jedoch den Nachteil, dass bestimmte Zeichen, wie beispielsweise der Buchstabe O und die Ziffer 0, die nach der ICAO-Vorgabe in der Schriftart OCR-B in Identifikationsdokumenten verwendet werden, nicht eindeutig erkannt bzw. voneinander unterschieden werden können. Das führt bei bekannten OCR-Verfahren zu hohen Falscherkennungsraten. Aus diesem Grund werden bei Identifikationsdokumenten zusätzlich Kontext-basierte Zeichenerkennungsverfahren herangezogen, welche insbesondere in der sogenannten maschinenlesbare Zone (MRZ) eines Identifikationsdokumentes verbesserte Ergebnisse liefern. Eine typische MRZ umfasst einen Ziffern- oder Buchstabenkontext, wie beispielsweise Geburtsdatum, Gültigkeitsdatum, Vor- und Zunamen, welcher zur Zeichenerkennung zusätzlich herangezogen werden kann.

Mit der Einführung alphanumerischer Seriennummern in den Identifikationsdokumenten wurde jedoch ein Bereich der MRZ geschaffen, der sowohl Ziffern als auch Buchstaben enthalten kann. Die verwendeten Kontext-basierten Verfahren greifen daher nicht mehr, so dass beispielsweise die Unterscheidung des Buchstabens O von der Ziffer 0 häufig nicht mehr fehlerfrei möglich ist.

Es ist daher die Aufgabe der vorliegenden Erfindung, ein Konzept zur Erkennung von Zeichen bereitzustellen, das eine eindeutige Erkennung bzw. Unterscheidung von Zeichen, beispielsweise des Buchstabens O und der Ziffer 0 in der OCR-B-Schrift, ohne Hinzuziehung von Kontextinformationen ermöglicht.

Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass zur eindeutigen Erkennung von Zeichen Häufigkeiten von Grauwertgradientenrichtungen entlang von Konturabschnitten, d.h. Regionen, eines Zeichens ausgewertet werden können. So kann beispielsweise ein Verhältnis von Häufigkeiten von horizontal verlaufenden Grauwertgradienten zu vertikal oder diagonal verlaufenden Grauwertgradienten ermittelt werden, um das jeweilige Zeichen zu erkennen. Dabei wird ausgenutzt, dass jedes Zeichen unterschiedliche Konturabschnitte, wie etwa Eckkrümmungen oder abschnittsweise gerade Schenkel aufweisen kann, deren Längen bzw. Neigungen zeichenspezifisch sind. Es kann ferner ausgenutzt werden, dass ein Zeichen einen bestimmten Konturabschnitt nicht aufweist. Ein Beispiel für ein derartiges Zeichen ist der Buchstabe "I", welcher keine Eckkrümmung aufweist. Das Verfahren eignet sich besonders zur Unterscheidung der Ziffer "0" von dem Buchstaben "O".

Bei der OCR-B-Schriftart ergibt sich so ein eindeutiger Unterschied zwischen dem Buchstaben O und der Ziffer 0, welcher eine Erkennung dieser Zeichen ermöglicht. Dadurch kann die Falscherkennungsrate erheblich verringert werden. Zur Bestimmung von Häufigkeiten von Grauwertgradientenrichtungen wird keinerlei Kontextinformation benötigt, so dass das Konzept in bestehende Zeichenerkennungsverfahren, welche auf der Basis von Klassifikatoren arbeiten, integriert werden kann. Das Konzept kann jedoch auch in mehrstufigen Zeichenerkennungsverfahren eingesetzt werden und dort die der beispielsweise musterbasierten Zeichenerkennung nachgelagerte Kontextanalyse ersetzen. Das Konzept kann ferner sowohl bei der automatisierten Prüfung von Wert- und Sicherheitsdokumenten mit und ohne Elektronik, als auch beim Auslesen elektronischer Dokumente, wie beispielsweise elektronischer Reisepass oder Personalausweis, mit Hilfe des BAC-Verfahrens (Basic Access Control) oder PACE-Verfahren (Password Authenticated Connection Establishment) vorteilhaft eingesetzt werden.

Das Konzept kann beispielsweise eingesetzt werden, um ein oder mehrere Zeichen, welche in einer MRZ oder in einer anderen auf dem Dokument aufgebrachten Zeichenfolge, beispielsweise einem Code, abgebildet sind, optisch zu erkennen. Wert- und Sicherheitsdokumente mit und ohne Elektronik können sein: ID-Dokumente, wie Personalausweise, Reisepässe, Zugangskontrollausweise, Berechtigungsausweis, Unternehmensausweise, Visa, Steuerzeichen, Tickets, Führerscheine, Kraftfahrzeugpapiere, Banknoten, Schecks, Postwertzeichen, Zahlungsmittel, beispielsweise Bankkarten oder Kreditkarten. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Befinden sich die zu erkennenden Zeichen beispielsweise in der MRZ eines derartigen Dokumentes, können diese optisch beispielsweise mittels einer Infrarot-Erfassung erfasst bzw. aufgenommen werden.

Gemäß einem Aspekt betrifft die Erfindung ein Verfahren zum Erkennen eines Zeichens, insbesondere zum automatischen Erkennen eines Zeichens, das eine durch Grauwertverläufe gebildete Zeichenkontur aufweist. Das Verfahren umfasst das Bestimmen einer Mehrzahl von Grauwertgradienten anhand der Grauwertverläufe, das Bestimmen einer ersten Anzahl von Grauwertgradienten der Mehrzahl von Grauwertgradienten, welche bezüglich einer ersten Richtung innerhalb eines ersten Winkels verlaufen, sowie das Bestimmen einer zweiten Anzahl von Grauwertgradienten der Mehrzahl von Grauwertgradienten, welche bezüglich einer zweiten Richtung innerhalb eines zweiten Winkelbereichs verlaufen. Das Verfahren umfasst ferner das Erkennen des Zeichens anhand einer Relation zwischen der ersten Anzahl von Grauwertgradienten und der zweiten Anzahl von Grauwertgradienten.

Die Grauwerte und die Grauwertgradienten sind beispielsweise digital speicherbare Werte und können mittels einer digitalen und automatisierten Verarbeitung erfasst, verarbeitet und ausgewertet werden. Jeder Grauwert kann beispielsweise einen Wert zwischen 0 und 255 annehmen. Die Relation kann ebenfalls ein digitaler Wert sein. Liegt die Relation als digitaler Wert in einem ersten digitalen Wertebereich, so handelt es sich bei dem Zeichen um ein erstes Zeichen. Liegt dieser Wert hingegen in einem zweiten digitalen Wertebereich, so handelt es sich bei dem Zeichen um ein zweites Zeichen. Die Auswertung der Relation zur Zeichenerkennung kann daher digital erfolgen. Das Verfahren kann beispielsweise automatisiert mittels einer digitalen Datenverarbeitungsvorrichtung ausgeführt werden.

Das Zeichen kann beispielsweise ein Buchstabe oder eine Ziffer oder ein weiteres Element einer Schriftart, beispielsweise der vorstehend erwähnten OCR-B-Schriftart, sein. Dabei entspricht der Grauwertverlauf einem Helligkeitsverlauf in der Schwarz-Weißen Abbildungsebene. Die Grauwertverläufe sind bestimmt durch Änderungen der Grauwerte, welche beispielsweise digital in einem Speicher gespeichert sein können.

Das Verfahren kann insbesondere zur Erkennung von Zeichen in einem Identifikationsdokument der vorgenannten Art, insbesondere in einer MRZ oder eines Identifikationscodes eines derartigen Identifikationsdokumentes, eingesetzt werden.

Gemäß einer Ausführungsform werden die erste Anzahl und die zweite Anzahl von Graustufengradienten zueinander ins Verhältnis gesetzt, um die Relation zwischen der ersten Anzahl und der zweiten Anzahl von Grauwertgradienten zu erhalten. Auf diese Weise kann eine relative Häufigkeit der innerhalb des ersten Winkelbereichs sowie der innerhalb des zweiten Winkelbereichs verlaufenden Grauwertgradienten, d.h. eine relative Häufigkeit von bestimmten Gradientenrichtungen, bestimmt werden. Zur Erfassung der jeweiligen Anzahl von Grauwertgradienten können diejenigen Grauwertgradienten, welche innerhalb des jeweiligen Winkelbereichs laufen, in ein Histogramm eingetragen werden. Das Histogramm kann beispielsweise auf die erste Anzahl oder auf die zweite Anzahl von Grauwertgradienten normiert werden, wodurch eine relative Häufigkeit von Gradientenrichtungen erhalten werden kann. Die Relation ist grundsätzlich zeichenspezifisch und ermöglicht daher eine genauere Zeichenerkennung.

Das Zeichen kann beispielsweise mit einem ortsfesten Koordinatensystems mit einer vertikalen und einer horizontalen Koordinate verknüpft sein. Die Verknüpfung kann beispielsweise eine Zuordnung des Zeichens zu dem ortsfesten Koordinatensystems oder eine Anordnung des Zeichens in dem ortsfesten Koordinatensystem umfassen. Das ortsfeste Koordinatensystem kann beispielsweise in der Gestalt eines Gitters über das Zeichen gelegt werden. Das Zeichen, beispielsweise die Ziffer 0, kann bezüglich des ortsfesten Koordinatensystems derart angeordnet sein, dass die Zeichenlängsachse mit der vertikalen Achse des ortsfesten Koordinatensystems und die Zeichenquerachse mit der horizontalen Achse des ortsfesten Koordinatensystems zusammenfallen.

Gemäß einer Ausführungsform ist das Zeichen mit einem ortsfesten Koordinatensystem, beispielsweise wie vorstehend ausgeführt, verknüpft, wobei die erste Richtung und die zweite Richtung bezüglich zumindest einer Koordinate des ortsfesten Koordinatensystems verlaufen. Die Winkelbereiche können durch Winkelbereiche bezüglich der zumindest einen Koordinate festgelegt sein. Bei der Koordinate kann es sich beispielsweise um eine vertikale oder um eine horizontale Koordinate des ortsfesten Koordinatensystems handeln.

Gemäß einer Ausführungsform ist das Zeichen mit einem ortsfesten Koordinatensystem, beispielsweise wie vorstehend ausgeführt, verknüpft, und bezüglich einer horizontalen Koordinate sowie einer vertikalen Koordinate ausgerichtet. Dabei fällt die erste Richtung mit der horizontalen Koordinate oder mit der vertikalen Koordinate zusammen. Die zweite Richtung verläuft zwischen der horizontalen Koordinate und der vertikalen Koordinate. Die zweite Richtung kann beispielsweise diagonal zwischen der horizontalen Koordinate und der vertikalen Koordinate verlaufen. Durch die Verwendung der zweiten Richtung kann insbesondere eine Eckkrümmung des Zeichens erfasst werden.

Gemäß einer Ausführungsform umfassen der erste Winkelbereich und der zweite Winkelbereich jeweils einen Winkelbereich zwischen -22,5° und +22,5° um die jeweilige Richtung. Die absolute Winkelspanne umfasst somit 45° oder weniger. Bei der Bestimmung der jeweiligen Anzahl von Grauwertgradienten werden gemäß einer Ausführungsform nur diejenigen Grauwertgradienten erfasst, welche in dem jeweiligen Winkelbereich liegen. Die übrigen Grauwertgradienten werden zur Zeichenerkennung nicht herangezogen. Die Erfassung der in dem jeweiligen Winkelbereich liegenden Grauwertgradienten kann mittels eines Histogramms durchgeführt werden.

Gemäß einer Ausführungsform liegen die Grauwertverläufe als Änderungen der Grauwert- bzw. Helligkeitswerte vor, welche jeweils beispielsweise jeweils einen Wert zwischen 0 und 255 annehmen können. Zum Bestimmen der Mehrzahl von Grauwertgradienten können Differenzen zwischen Grauwerten bestimmt werden. Dabei ist beispielsweise der Grauwert Schwarz mit dem Wert 0 verknüpft. Der Grauwert Weiß ist hingegen mit dem Wert 255 verknüpft. Nach einer Differenzbildung entsteht ein Grauwertgradient, welcher maximal durch den Wert 255 repräsentiert sein kann. Dieser Wert entspricht dem maximal möglichen Grauwertgradienten, also der maximal möglichen Änderung eines Grauwertverlaufs. Da die Grauwertgradienten entlang der Zeichenkontur bestimmt werden, ergeben sich auf diese Weise automatisch unterschiedliche Grauwertgradientenrichtungen, welche zur Zeichenerkennung in Relation zueinander gesetzt werden können.

Gemäß einer Ausführungsform werden zum Bestimmen der Mehrzahl der Grauwertgradienten die Grauwertverläufe gefiltert, insbesondere tiefpassgefiltert. Hierbei können beispielsweise Mittelwerte von benachbarten Grauwerten gebildet werden, um unerwünschte Grauwertsprünge zu reduzieren.

Gemäß einer Ausführungsform umfasst das Verfahren eine optische Erfassung, beispielsweise Aufnahme, des Zeichens. Die optische Erfassung kann beispielsweise eine Infrarot-Erfassung oder eine Schwarz-Weiß-Erfassung sein. Durch die optische Erfassung wird die durch Grauwertverläufe gebildete Zeichenkontur bereitgestellt.

Gemäß einem weiteren Aspekt betrifft die Erfindung eine Vorrichtung zum Erkennen eines Zeichens, das eine durch Grauwertverläufe gebildete Zeichenkontur aufweist, mit einem Prozessor, der ausgebildet ist, eine Mehrzahl von Grauwertgradienten anhand der Grauwertverläufe zu bestimmen, eine erste Anzahl von Grauwertgradienten der Mehrzahl von Grauwertgradienten, welche bezüglich einer ersten Richtung innerhalb eines ersten Winkelbereichs verlaufen, zu erfassen, eine zweite Anzahl von Grauwertgradienten der Mehrzahl von Grauwertgradienten, welche bezüglich einer zweiten Richtung innerhalb eines zweiten Winkelbereichs verlaufen, zu erfassen, und das Zeichen anhand der ersten Anzahl der Grauwertgradienten und der zweiten Anzahl der Grauwertgradienten zu erkennen.

Der Prozessor kann beispielsweise programmtechnisch eingerichtet und vorgesehen sein, ein Programm auszuführen, um das Verfahren zum Erkennen eines Zeichens oder um einzelne Schritte des Verfahrens zum Erkennen eines Zeichens auszuführen.

Gemäß einer Ausführungsform umfasst die Vorrichtung eine optische Erfassungseinrichtung zum Erfassen der durch Grauwertverläufe gebildeten Zeichenkontur mittels einer Infrarot-Erfassung.

Die Vorrichtung kann zur Erkennung von Zeichen in einem Identifikationsdokument der vorgenannten Art, insbesondere in einer MRZ eines derartigen Identifikationsdokumentes, verwendet werden.

Gemäß einem weiteren Aspekt betrifft die Erfindung daher die Verwendung der Vorrichtung zum Erkennen eines Zeichens in einem Identifikationsdokument der vorgenannten Art, insbesondere in einer MRZ eines Identifikationsdokumentes der vorgenannten Art.

Weitere Merkmale der Vorrichtung zum Erkennen eines Zeichens, insbesondere weitere Merkmale des Prozessors, ergeben sich funktional unmittelbar aus den Schritten des Verfahrens zum Erkennen eines Zeichens.

Gemäß einem weiteren Aspekt betrifft die Erfindung ein Computerprogramm mit einem Programmcode zur Durchführung eines Verfahrens zum Erkennen eines Zeichens, das eine durch Grauwertverläufe gebildete Zeichenkontur aufweist, mit den Schritten des Bestimmens einer Mehrzahl von Grauwertgradienten anhand der Grauwertverläufe, des Bestimmens einer ersten Anzahl von Grauwertgradienten der Mehrzahl von Grauwertgradienten, welche bezüglich einer ersten Richtung innerhalb eines ersten Winkelbereichs verlaufen, des Bestimmens einer zweiten Anzahl von Grauwertgradienten der Mehrzahl von Grauwertgradienten, welche bezüglich einer zweiten Richtung innerhalb eines zweiten Winkelbereichs verlaufen, und des Erkennens des Zeichens anhand einer Relation zwischen der ersten Anzahl von Grauwertgradienten und der zweiten Anzahl von Grauwertgradienten, wenn der Programmcode auf einem Computer abläuft. Der Programmcode läuft auf einem Computer ab, wenn beispielweise das Programm mittels des Computers ausgeführt wird. Weitere Schritte des Verfahrens ergeben sich unmittelbar aus den Schritten des Verfahrens zum Erkennen eines Zeichens.

Gemäß einem weiteren Aspekt betrifft die Erfindung ein Computerprogramm-Produkt mit auf einem maschinenlesbaren Träger gespeichertem Programmcode zur Durchführung eines Verfahrens zum Erkennen eines Zeichens, das eine durch Grauwertverläufe gebildete Zeichenkontur aufweist, mit den Schritten des Bestimmens einer Mehrzahl von Grauwertgradienten anhand der Grauwertverläufe, des Bestimmens einer ersten Anzahl von Grauwertgradienten der Mehrzahl von Grauwertgradienten, welche bezüglich einer ersten Richtung innerhalb eines ersten Winkelbereichs verlaufen, des Bestimmens einer zweiten Anzahl von Grauwertgradienten der Mehrzahl von Grauwertgradienten, welche bezüglich einer zweiten Richtung innerhalb eines zweiten Winkelbereichs verlaufen, und des Erkennens des Zeichens anhand einer Relation zwischen der ersten Anzahl von Grauwertgradienten und der zweiten Anzahl von Grauwertgradienten, wenn der Programmcode auf einem Computer abläuft. Der Programmcode läuft auf einem Computer ab, wenn beispielsweise ein Programm mit dem Programmcode mittels des Computers ausgeführt wird. Weitere Schritte des Verfahrens ergeben sich unmittelbar aus den Schritten des Verfahrens zum Erkennen eines Zeichens.

Weitere Ausführungsbeispiele werden Bezug nehmend auf die beiliegenden Zeichnungen näher erläutert. Es zeigen:
- Fig. 1: ein Diagramm eines Verfahrens zum Erkennen eines Zeichens gemäß einer Ausführungsform;
- Fig. 2: eine durch Grauwertverläufe gebildete Kontur des Buchstabens O gemäß einer Ausführungsform;
- Fig. 3: eine durch Grauwertverläufe gebildete Kontur der Ziffer 0 gemäß einer Ausführungsform;
- Fig. 4: Gradientenverläufe gemäß einer Ausführungsform;
- Fig. 5: Gradientenverläufe gemäß einer Ausführungsform; und
- Fig. 6: ein Blockdiagramm einer Vorrichtung zum Erkennen eines Zeichens gemäß einer Ausführungsform.

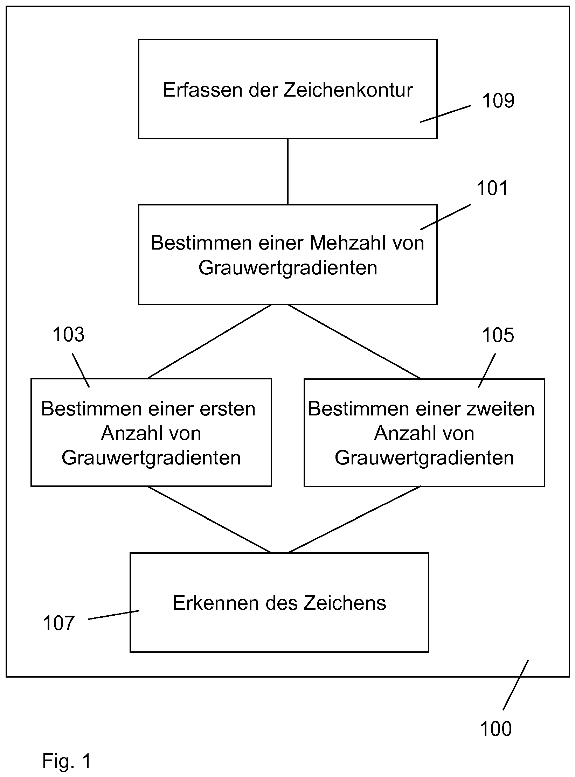

Fig. 1 zeigt ein Diagramm eines Verfahrens 100 zum Erkennen eines Zeichens anhand von Grauwertverläufen, welche die Zeichenkontur des Zeichens bilden. Das Verfahren 100 umfasst das Bestimmen 101 einer Mehrzahl von Grauwertgradienten. Das Verfahren 100 umfasst ferner das Bestimmen 103 einer ersten Anzahl von Grauwertgradienten, welche bezüglich einer ersten Richtung innerhalb eines ersten Winkelbereichs verlaufen, sowie das Bestimmen 105 einer zweiten Anzahl von Grauwertgradienten, welche bezüglich einer zweiten Richtung innerhalb eines zweiten Winkelbereichs verlaufen, anhand der Mehrzahl von Grauwertgradienten. Der erste Winkelbereich und der zweite Winkelbereich können gleich oder unterschiedlich sein und jeweils beispielsweise innerhalb eines Winkelbereichs von +/-22.5° bezüglich der jeweiligen Richtung verlaufen. Die Verfahrensschritte 103 und 105 können parallel oder nacheinander in einer beliebigen Reihenfolge ausgeführt werden.

Das Verfahren umfasst ferner das Erkennen 107 des Zeichens anhand einer Relation zwischen der ersten Anzahl von Grauwertgradienten und der zweiten Anzahl von Grauwertgradienten. Hierbei können die erste Anzahl und die zweite Anzahl zueinander ins Verhältnis, beispielsweise unter Verwendung eines Histogramms, gesetzt werden.

Das Verfahren kann optional das Erfassen 109 des Zeichens beispielsweise durch eine Infrarot-Aufnahme umfassen.

Das Verfahren kann eingesetzt werden, um ein oder mehrere Zeichen, welche in einem Identifikationsdokument, insbesondere in einer MRZ eines Identifikationsdokumentes, abgebildet sind, zu erkennen. Das Identifikationsdokument kann ein Ausweisdokument, ein Reisepass, ein Zahlungsmittel, beispielsweise eine Bankkarte oder eine Kreditkarte, ein Führerschein, ein Unternehmensausweis, ein Frachtbrief oder ein Berechtigungsausweis sein.

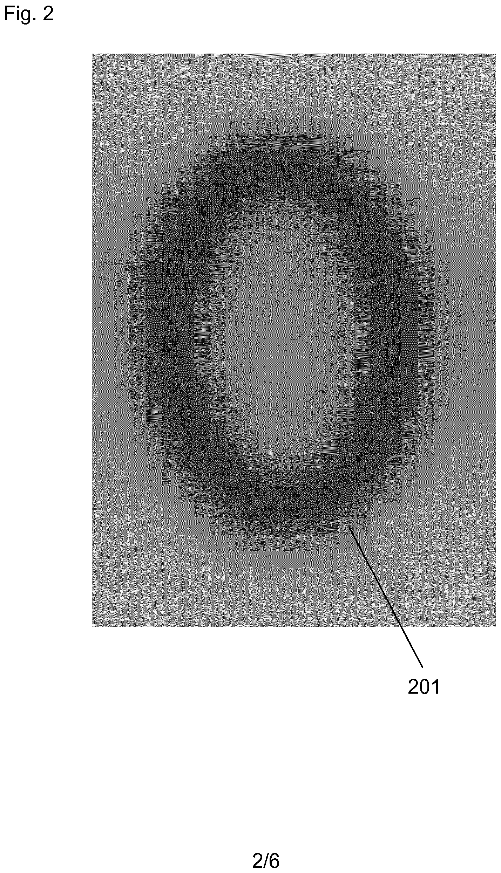

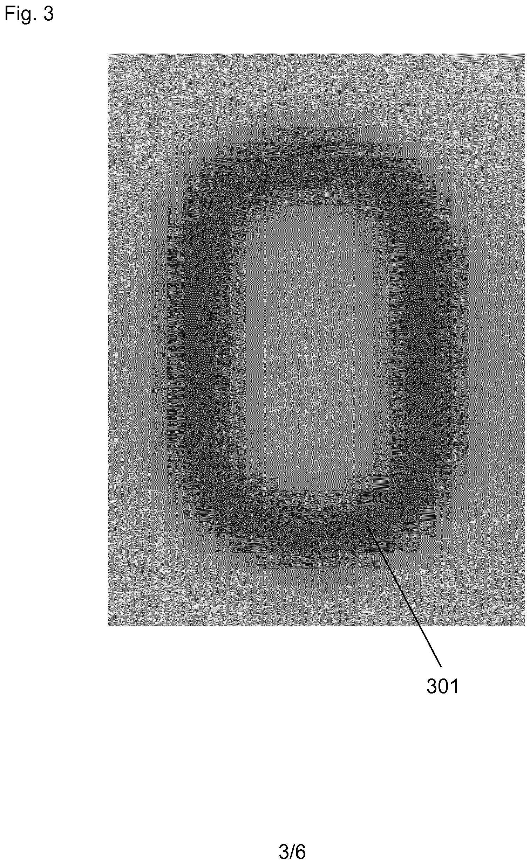

In den Fig. 2 und 3 sind beispielhaft jeweils durch Verläufe von Grauwerten 201, 203, also durch Grauwertverläufe, gebildete Zeichenkonturen gemäß der OCR-B-Schrift dargestellt. In Fig. 2 ist beispielhaft der Buchstabe O dargestellt. Fig. 3 zeigt hingegen die Ziffer 0.

Wie in Fig. 2 dargestellt, ist der Buchstabe O durch eine Zeichenkontur festgelegt, welche durch Verläufe von Grauwerten 201 gebildet ist. Die Grauwerte 201 liegen beispielsweise in einem Speicher als digitale Zahlenwerte zwischen 0 und 255 vor. Dabei repräsentieren die Ziffer 0 den Grauwert Schwarz und die Ziffer 255 den Grauwert Weiß. Wird das Zeichen digital abgebildet, so können die Grauwerte als Pixel unterschiedlicher Helligkeit abgebildet werden. Die Grauwertunterschiede ergeben Grauwertgradienten, deren Steigung durch einen Differenzwert zwischen benachbarten oder voneinander weiter beabstandeten Grauwerten bestimmt werden kann. Die vorstehenden Ausführungen gelten sinngemäß für das in Fig. 3 dargestellte Zeichen.

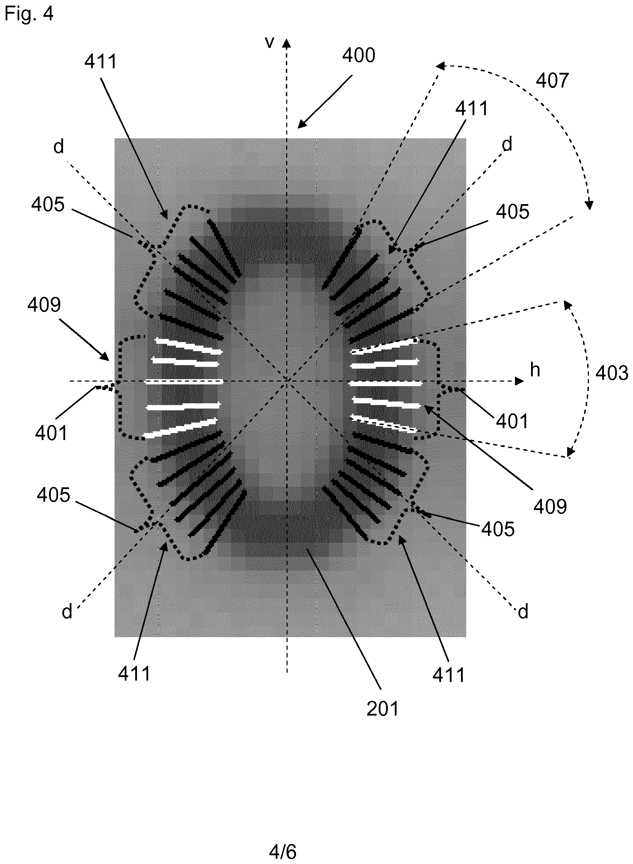

Fig. 4 veranschaulicht das Konzept zum Erkennen eines Zeichens anhand einer relativen Häufigkeit von Gradientenrichtungen am Beispiel des in Fig. 2 dargestellten Buchstabens O. In Fig. 4 ist der Buchstabe O beispielhaft bezüglich eines ortsfesten Koordinatensystems 400 mit einer vertikalen Koordinate v und einer horizontalen Koordinate h dargestellt. Ferner ist eine Richtung d abgebildet, welche zwischen den Koordinaten v und h, beispielsweise diagonal, verläuft.

Anhand der Verläufe der Grauwerte 201 wird eine erste Anzahl von Grauwertgradienten 401 bestimmt, welche bezüglich einer ersten Richtung innerhalb eines ersten Winkelbereichs 403 verlaufen. Die erste Richtung fällt beispielhaft mit der horizontalen Koordinate h zusammen.

Ferner wird eine zweite Anzahl von Grauwertgradienten 405 bestimmt, welche bezüglich einer zweiten Richtung d innerhalb eines zweiten Winkelbereichs 407 verlaufen. Die zweite Richtung d verläuft beispielsweise diagonal zwischen den Koordinaten h und v.

Der erste Winkelbereich 403 und der zweite Winkelbereich 407 können jeweils einen absoluten Winkelbereich von 45° bzw. einen Winkelbereich von -22.5° bis +22.5° oder weniger um die jeweilige Richtung aufspannen. Die Winkelbereiche 403 und 407 können jedoch für andere Zeichen andere Werte annehmen.

Die erste Anzahl und die zweite Anzahl der Grauwertgradienten 401, 405 werden zueinander in Relation, beispielsweise ins Verhältnis, gesetzt, um auf diese Weise eine relative Häufigkeit von Gradientenrichtungen zu erhalten. Dabei können diejenigen Gradienten unberücksichtigt bleiben, welche außerhalb des jeweiligen Winkelbereichs 403, 407 liegen.

Gemäß einer Ausführungsform kann die erste Anzahl von Gradientenverläufen 401 in einer Region 409 oder in einer Mehrzahl von Regionen 409 des Zeichens 201 bestimmt werden. Die Regionen 409 sind beispielhaft durch gegenüberliegende Schenkel des Buchstabens festgelegt. Die zweite Anzahl von Gradientenverläufen 405 kann hingegen in einer Region 411 oder in einer Mehrzahl von Regionen 411 des Zeichens 201 bestimmt werden. Die jeweilige Region 411 kann beispielsweise durch die jeweilige Eckkrümmung des Zeichens 201 festgelegt sein.

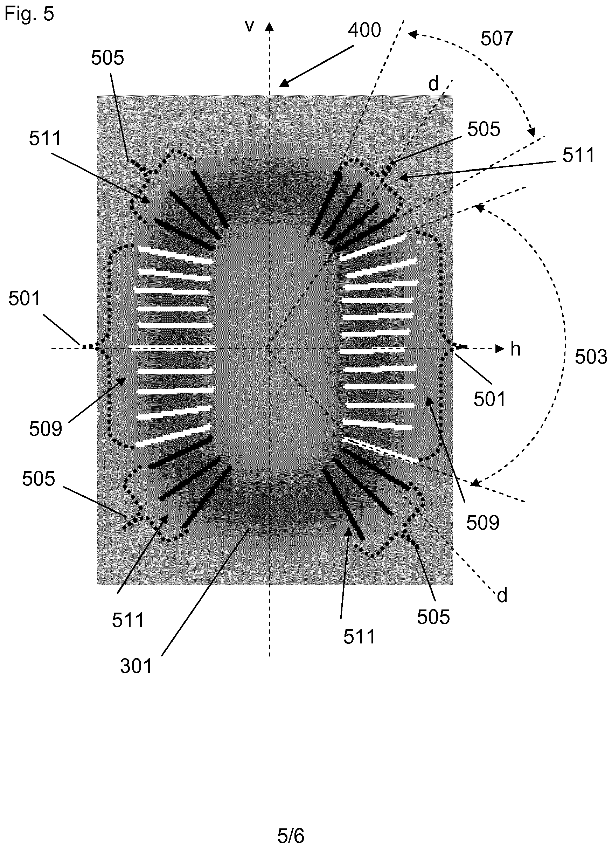

In Fig. 5 ist das Konzept zum Erkennen eines Zeichens anhand einer relativen Häufigkeit von Gradientenrichtungen am Beispiel der in Fig. 3 dargestellten Ziffer 0 verdeutlicht.

Fig. 5 zeigt beispielhaft eine erste Anzahl von Grauwertgradienten 501, welche bezüglich einer ersten Richtung innerhalb eines ersten Winkelbereichs 503 verlaufen. Die erste Richtung kann beispielhaft mit der horizontalen Koordinate h des Koordinatensystems 400 zusammenfallen. Ferner ist eine zweite Anzahl von Grauwertgradienten 505 dargestellt, welche bezüglich einer zweiten Richtung d innerhalb eines zweiten Winkelbereichs 507 verlaufen. Die zweite Richtung verläuft zwischen den Koordinaten h und v.

Gemäß einer Ausführungsform kann die erste Anzahl von Graustufengradienten 501 in einer Region 509 oder in einer Mehrzahl von Regionen 509 des Zeichens 301 bestimmt werden. Die Regionen 509 sind beispielhaft durch gegenüberliegende Schenkel der Ziffer 0 festgelegt. Die zweite Anzahl von Gradientenverläufen 505 kann hingegen in einer Region 511 oder in einer Mehrzahl von Regionen 511 des Zeichens 301 bestimmt werden. Die jeweilige Region 511 kann beispielsweise durch die jeweilige Eckkrümmung des Zeichens 301 festgelegt sein.

Der erste Winkelbereich 503 und der zweite Winkelbereich 507 können jeweils einen absoluten Winkelbereich von 45° bzw. einen Winkelbereich von -22.5° bis +22.5° oder weniger um die jeweilige Richtung aufspannen.

Die relative Häufigkeit kann beispielsweise als ein Zeichenklassifikator zur Unterscheidung der Zeichen voneinander eingesetzt werden. Handelt es sich bei den Zeichen um den Buchstaben O und die Ziffer 0, so wird auf diese Weise ein Grauwertgradienten-basierter 0-O-Klassifikator bereitgestellt, um die Zeichen zu erkennen bzw. um sie voneinander zu unterscheiden.

Bei symmetrischen Zeichen kann die relative Häufigkeit der Gradientenrichtungen grundsätzlich auch anhand eines Zeichenabschnitts bestimmt werden. So kann beispielsweise das in Fig. 4 oder das in Fig. 5 abgebildete Zeichen 201, 301 anhand dessen oberen Hälfte, dessen unteren Hälfte, dessen rechten Hälfte, dessen linken Hälfte, oder anhand eines Zeichenabschnitts nur in einem der Quadranten des Koordinatensystems 400 erfasst werden.

Zur Zeichenerkennung kann somit die relative Häufigkeit der Gradientenrichtungen in der jeweiligen Region 409, 411 bzw. 509, 511 ausgewertet werden. Eine Bestimmung der Zeichenkontur sowie eine Ausführung eines darauf basierenden Template-Matching-Verfahrens werden somit nicht benötigt. Damit entfallen auch die üblicherweise notwendigen Training- bzw. Musterdaten sowie die für diese Daten notwendigen Berechnungen und Vergleiche. Dadurch verringert sich die Verfahrenskomplexität.

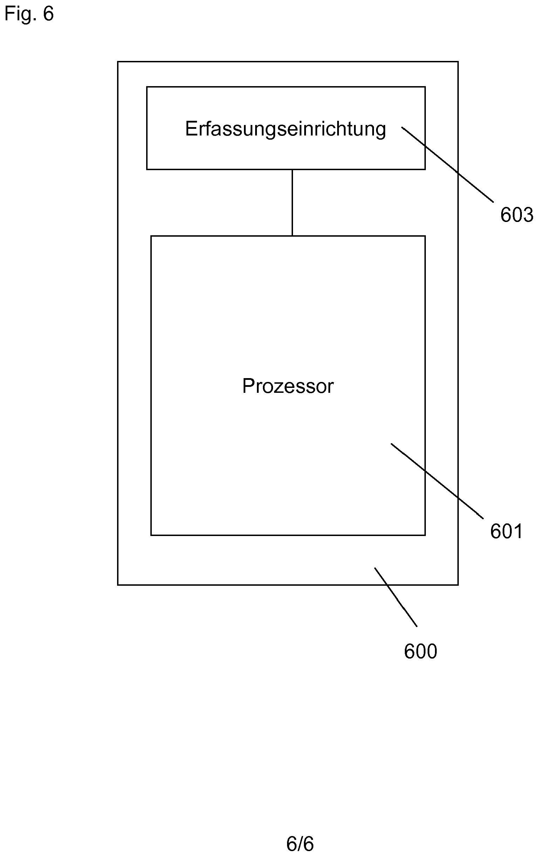

Fig. 6 zeigt ein Blockdiagramm einer Vorrichtung 600 zum Erkennen eines Zeichens, das eine durch Grauwertverläufe gebildete Zeichenkontur aufweist. Die Vorrichtung 600 umfasst einen Prozessor 601, der ausgebildet ist, eine Mehrzahl von Grauwertgradienten anhand der Grauwertverläufe zu bestimmen, eine erste Anzahl von Grauwertgradienten der Mehrzahl von Grauwertgradienten, welche bezüglich einer ersten Richtung innerhalb eines ersten Winkelbereichs verläuft, zu erfassen, eine zweite Anzahl von Grauwertgradienten der Mehrzahl von Grauwertgradienten, welche bezüglich einer zweiten Richtung innerhalb eines zweiten Winkelbereichs verlaufen, zu erfassen und das Zeichen anhand der ersten Anzahl und der zweiten Anzahl zu erkennen. Der Prozessor 601 kann ausgebildet sein, die Schritte 101 bis 107 des in Fig. 1 abgebildeten Verfahrens 100 auszuführen. Hierzu kann der Prozessor programmtechnisch eingerichtet sein und beispielsweise ein Programm zur Ausführung des Verfahrens auszuführen.

Optional kann die Vorrichtung 600 eine Erfassungseinrichtung 603 aufweisen, welche ausgebildet ist, beispielsweise eine Infrarot-Erfassung oder eine Schwarz-Weiß-Erfassung eines Zeichens durchzuführen, um die durch Gradientenverläufe gebildete Zeichenkontur bereitzustellen.

Gemäß einer Ausführungsform kann zur Zeichenerkennung lediglich überprüft werden, ob die ermittelte Relation zwischen der ersten Anzahl und der zweiten Anzahl, beispielsweise ein Quotient dieser beiden Anzahlen, über oder unter einem vorgegebenen Wert liegt. Dieser vorgegebene Wert kann als Schwellwert in einem Speicher abgelegt und vorbestimmt sein. Auf diese Weise ist es möglich, die Falscherkennungsrate und gleichzeitig die Verfahrenskomplexität zu reduzieren. Das Verfahren liefert darüber hinaus robuste Ergebnisse und kann schnell ausgeführt werden, so dass die Erkennung von Zeichen in einem Text insgesamt schneller und sicherer durchgeführt werden kann.

### Bezugszeichen:

- 100: Verfahren
- 101: Bestimmen einer Mehrzahl von Grauwertgradienten
- 103: Bestimmen einer ersten Anzahl von Grauwertgradienten
- 105: Bestimmen einer zweiten Anzahl von Grauwertgradienten
- 107: Erkennen
- 109: Erfassen
- 201: Grauwerte
- 301: Grauwerte
- 400: Koordinatensystem
- 401: erste Anzahl von Grauwertgradienten
- 403: erster Winkelbereich
- 405: zweite Anzahl von Grauwertgradienten
- 407: zweiter Winkelbereich
- 409: Region
- 411: Region
- 501: erste Anzahl von Grauwertgradienten
- 503: erster Winkelbereich
- 505: zweite Anzahl von Grauwertgradienten
- 507: zweiter Winkelbereich
- 509: Region
- 511: Region
- 600: Vorrichtung
- 601: Prozessor
- 603: Erfassungseinrichtung

- v: vertikale Koordinate
- h: horizontale Koordinate
- d: Richtung

## Patentansprüche

1. Verfahren zum Unterscheiden des Buchstabens O und der Ziffer 0 in der OCR-B-Schrift durch Erkennen eines Zeichens, das eine durch Grauwertverläufe gebildete Zeichenkontur aufweist, mit:
Bestimmen (101) einer Mehrzahl von Grauwertgradienten anhand der Grauwertverläufe;
Bestimmen (103) einer ersten Anzahl von Grauwertgradienten der Mehrzahl von Grauwertgradienten, welche bezüglich einer ersten Richtung innerhalb eines ersten Winkelbereichs verlaufen;
Bestimmen (105) einer zweiten Anzahl von Grauwertgradienten der Mehrzahl von Grauwertgradienten, welche bezüglich einer zweiten Richtung innerhalb eines zweiten Winkelbereichs verlaufen; und
Erkennen (107) des Zeichens anhand einer Relation zwischen der ersten Anzahl von Grauwertgradienten und der zweiten Anzahl von Grauwertgradienten
wobei zum Erkennen (107) des Zeichens die erste Anzahl und die zweite Anzahl zueinander ins Verhältnis gesetzt werden, um die Relation zu erhalten.

2. Verfahren nach Anspruch 1, wobei das Zeichen mit einem ortsfesten Koordinatensystem (400) verknüpft ist, und wobei die erste Richtung und die zweite Richtung bezüglich zumindest einer Koordinate des ortsfesten Koordinatensystems (400) verlaufen.

3. Verfahren nach einem der vorangehenden Ansprüche, wobei das Zeichen mit einem ortsfesten Koordinatensystem (400) mit einer horizontalen Koordinate und mit einer vertikalen Koordinate verknüpft ist, wobei die erste Richtung mit der horizontalen Koordinate oder mit der vertikalen Koordinate zusammenfällt, und wobei die zweite Richtung zwischen der horizontalen Koordinate und der vertikalen Koordinate, insbesondere diagonal, verläuft.

4. Verfahren nach einem der vorangehenden Ansprüche, wobei der erste Winkelbereich und der zweite Winkelbereich jeweils einen Winkelbereich zwischen -22.5° und 22.5° umfassen.

5. Verfahren nach einem der vorangehenden Ansprüche, wobei die Grauwertverläufe als Änderungen von Grauwerten vorliegen, und wobei zum Bestimmen (101) der Mehrzahl der Grauwertgradienten Differenzen zwischen Grauwerten bestimmt werden.

6. Verfahren nach einem der vorangehenden Ansprüche, das ferner eine optische Erfassung (109) des Zeichens, insbesondere eine Infrarot-Erfassung oder eine Schwarz-Weiß-Erfassung, umfasst, um die durch Grauwertverläufe gebildete Zeichenkontur bereitzustellen.

7. Vorrichtung zum Unterscheiden des Buchstabens O und der Ziffer 0 in der OCR-B-Schrift durch Erkennen eines Zeichens, das eine durch Grauwertverläufe gebildete Zeichenkontur aufweist, mit einem Prozessor (601), der ausgebildet ist, eine Mehrzahl von Grauwertgradienten anhand der Grauwertverläufe zu bestimmen, eine erste Anzahl von Grauwertgradienten der Mehrzahl von Grauwertgradienten, welche bezüglich einer ersten Richtung innerhalb eines ersten Winkelbereichs verlaufen, zu erfassen, eine zweite Anzahl von Grauwertgradienten der Mehrzahl von Grauwertgradienten, welche bezüglich einer zweiten Richtung innerhalb eines zweiten Winkelbereichs verlaufen, zu erfassen, und das Zeichen anhand der ersten Anzahl von Grauwertgradienten und der zweiten Anzahl von Grauwertgradienten zu erkennen, wobei zum Erkennen des Zeichens die erste Anzahl und die zweite Anzahl zueinander ins Verhältnis gesetzt werden, um die Relation zu erhalten.

8. Computerprogramm mit einem Programmcode zur Durchführung eines Verfahrens zum Unterscheiden des Buchstabens O und der Ziffer 0 in der OCR-B-Schrift durch Erkennen eines Zeichens, das eine durch Grauwertverläufe gebildete Zeichenkontur aufweist, mit den Schritten des Bestimmens (101) einer Mehrzahl von Grauwertgradienten anhand der Grauwertverläufe, des Bestimmens (103) einer ersten Anzahl von Grauwertgradienten der Mehrzahl von Grauwertgradienten, welche bezüglich einer ersten Richtung innerhalb eines ersten Winkelbereichs verlaufen, des Bestimmens (105) einer zweiten Anzahl von Grauwertgradienten der Mehrzahl von Grauwertgradienten, welche bezüglich einer zweiten Richtung innerhalb eines zweiten Winkelbereichs verlaufen, und des Erkennens (107) des Zeichens anhand einer Relation zwischen der ersten Anzahl von Grauwertgradienten und der zweiten Anzahl von Grauwertgradienten, wobei zum Erkennen (107) des Zeichens die erste Anzahl und die zweite Anzahl zueinander ins Verhältnis gesetzt werden, um die Relation zu erhalten, wenn der Programmcode auf einem Computer abläuft.

9. Computerprogramm-Produkt mit auf einem maschinenlesbaren Träger gespeicherten Programmcode zur Durchführung eines Verfahrens zum Unterscheiden des Buchstabens O und der Ziffer 0 in der OCR-B-Schrift durch Erkennen eines Zeichens, das eine durch Grauwertverläufe gebildete Zeichenkontur aufweist, mit den Schritten des Bestimmens (101) einer Mehrzahl von Grauwertgradienten anhand der Grauwertverläufe, des Bestimmens (103) einer ersten Anzahl von Grauwertgradienten der Mehrzahl von Grauwertgradienten, welche bezüglich einer ersten Richtung innerhalb eines ersten Winkelbereichs verlaufen, des Bestimmens (105) einer zweiten Anzahl von Grauwertgradienten der Mehrzahl von Grauwertgradienten, welche bezüglich einer zweiten Richtung innerhalb eines zweiten Winkelbereichs verlaufen, und des Erkennens (107) des Zeichens anhand einer Relation zwischen der ersten Anzahl von Grauwertgradienten und der zweiten Anzahl von Grauwertgradienten, wobei zum Erkennen (107) des Zeichens die erste Anzahl und die zweite Anzahl zueinander ins Verhältnis gesetzt werden, um die Relation zu erhalten, wenn der Programmcode auf einem Computer abläuft.

## Claims

1. Method for distinguishing between the letter O and the numeral 0 in the font OCR-B by identifying a character comprising a character contour formed by grayscale value distributions, the method comprising:
determining (101) a plurality of grayscale value gradients on the basis of the grayscale value distributions;
determining (103) a first number of grayscale value gradients of the plurality of grayscale value gradients, which first number of grayscale value gradients extend within a first angle range with respect to a first direction;
determining (105) a second number of grayscale value gradients of the plurality of grayscale value gradients, which second number of grayscale value gradients extends within a second angle range with respect to a second direction; and
identifying (107) the character on the basis of a relation between the first number of grayscale value gradients and the second number of grayscale value gradients,
wherein, in order to identify (107) the character, the first number and the second number are compared so as to obtain the relation.

2. Method according to claim 1, wherein the character is associated with a fixed coordinate system (400), and wherein the first direction and the second direction extend with respect to at least one coordinate of the fixed coordinate system (400).

3. Method according to either of the preceding claims, wherein the character is associated with a fixed coordinate system (400) having a horizontal coordinate and a vertical coordinate, wherein the first direction coincides with the horizontal coordinate or with the vertical coordinate, and wherein the second direction extends between the horizontal coordinate and the vertical coordinate, in particular diagonally.

4. Method according to any of the preceding claims, wherein the first angle range and the second angle range each comprise an angle range between -22.5° and 22.5°.

5. Method according to any of the preceding claims, wherein the grayscale value distributions are changes of grayscale values and wherein, in order to determine (101) the plurality of the grayscale value gradients, differences between grayscale values are determined.

6. Method according to any of the preceding claims, which further comprises optical identification (109) of the character, in particular infra-red identification or black and white identification, in order to provide the character contour formed by grayscale value distributions.

7. Device for distinguishing between the letter O and the numeral 0 in the font OCR-B by identifying a character comprising a character contour formed by grayscale value distributions, the device comprising a processor (601) that is designed to determine a plurality of grayscale value gradients on the basis of the grayscale value distributions, to detect a first number of grayscale value gradients of the plurality of grayscale value gradients, which first number of grayscale value gradients extend within a first angle range with respect to a first direction, to detect a second number of grayscale value gradients of the plurality of grayscale value gradients, which second number of grayscale value gradients extend within a second angle range with respect to a second direction, and to identify the character on the basis of the first number of grayscale value gradients and the second number of grayscale value gradients, wherein, in order to identify the character, the first number and the second number are compared so as to obtain the relation.

8. Computer program comprising a program code for implementing a method for distinguishing between the letter O and the numeral 0 in the font OCR-B by identifying a character comprising a character contour formed by grayscale value distributions, the method comprising the steps of determining (101) a plurality of grayscale value gradients on the basis of the grayscale value distributions, determining (103) a first number of grayscale value gradients of the plurality of grayscale value gradients, which first number of grayscale value gradients extend within a first angle range with respect to a first direction, determining (105) a second number of grayscale value gradients of the plurality of grayscale value gradients, which second number of grayscale value gradients extend within a second angle range with respect to a second direction, and identifying (107) the character on the basis of a relation between the first number of grayscale value gradients and the second number of grayscale value gradients, wherein, in order to identify (107) the character, the first number and the second number are compared so as to obtain the relation when the program code is executed on a computer.

9. Computer program product comprising program code stored on a machine-readable medium for implementing a method for distinguishing between the letter O and the numeral 0 in the font OCR-B by identifying a character comprising a character contour formed by grayscale value distributions, the method comprising the steps of determining (101) a plurality of grayscale value gradients on the basis of the grayscale value distributions, determining (103) a first number of grayscale value gradients of the plurality of grayscale value gradients, which first number of grayscale value gradients extend within a first angle range with respect to a first direction, determining (105) a second number of grayscale value gradients of the plurality of grayscale value gradients, which second number of grayscale value gradients extend within a second angle range with respect to a second direction, and identifying (107) the character on the basis of a relation between the first number of grayscale value gradients and the second number of grayscale value gradients, wherein, in order to identify (107) the character, the first number and the second number are compared so as to obtain the relation when the program code is executed on a computer.

## Revendications

1. Procédé permettant de distinguer la lettre O et le chiffre 0 dans la police ROC-B par reconnaissance d'un caractère qui présente un contour de caractère formé par un dégradé de niveaux de gris, consistant à :
déterminer (101) une pluralité de gradients de niveaux de gris au moyen du dégradé de niveaux de gris ;
déterminer (103) un premier nombre de gradients de niveaux de gris de la pluralité de gradients de niveaux de gris qui évoluent dans un premier sens à l'intérieur d'une première plage angulaire ;
déterminer (105) un second nombre de gradients de niveaux de gris de la pluralité de gradients de niveaux de gris qui évoluent dans un second sens à l'intérieur d'une seconde plage angulaire ; et
reconnaître (107) le caractère au moyen d'une relation entre le premier nombre de gradients de niveaux de gris et le second nombre de gradients de niveaux de gris
dans lequel, pour reconnaître (107) le caractère, le premier nombre et le second nombre sont mis en relation l'un avec l'autre pour obtenir la relation.

2. Procédé selon la revendication 1, dans lequel le caractère est associé à un système de coordonnées fixes (400), et dans lequel le premier sens et le second sens sont définis par rapport à au moins une coordonnée du système de coordonnées fixes (400).

3. Procédé selon l'une quelconque des revendications précédentes, dans lequel le caractère est associé à un système de coordonnées fixes (400) ayant une coordonnée horizontale et une coordonnée verticale, le premier sens coïncidant avec la coordonnée horizontale ou la coordonnée verticale, et le second sens se dégradant entre la coordonnée horizontale et la coordonnée verticale, en particulier en diagonale.

4. Procédé selon l'une quelconque des revendications précédentes, dans lequel la première plage angulaire et la seconde plage angulaire comprennent chacune une plage angulaire comprise entre -22,5° et 22,5°.

5. Procédé selon l'une quelconque des revendications précédentes, dans lequel les dégradés de niveaux de gris sont présents en tant que changements de niveaux de gris, et dans lequel des différences entre les niveaux de gris sont déterminées pour déterminer (101) la pluralité de gradients de niveaux de gris.

6. Procédé selon l'une des revendications précédentes, comprenant en outre une détection optique (109) du caractère, en particulier une détection infrarouge ou une détection en noir et blanc, pour fournir le contour de caractère formé par un dégradé de niveaux de gris.

7. Dispositif permettant de distinguer la lettre O et le chiffre 0 dans la police ROC-B par reconnaissance d'un caractère qui présente un contour de caractère formé par un dégradé de niveaux de gris, avec un processeur (601) conçu pour déterminer une pluralité de gradients de niveaux de gris au moyen du dégradé de niveaux de gris, détecter un premier nombre de gradients de niveaux de gris de la pluralité de gradients de niveaux de gris qui évoluent dans un premier sens à l'intérieur d'une première plage angulaire, détecter un second nombre de gradients de niveaux de gris de la pluralité de gradients de niveaux de gris qui évoluent dans un second sens à l'intérieur d'une seconde plage angulaire, et reconnaître le caractère au moyen du premier nombre de gradients de niveaux de gris et du second nombre de gradients de niveaux de gris dans lequel, pour reconnaître le caractère, le premier nombre et le second nombre sont mis en relation l'un avec l'autre pour obtenir la relation.

8. Programme informatique pourvu d'un code programme pour mettre en oeuvre un procédé permettant de distinguer la lettre O et le chiffre 0 dans la police ROC-B par reconnaissance d'un caractère qui présente un contour de caractère formé par un dégradé de niveaux de gris, comprenant les étapes consistant déterminer (101) une pluralité de gradients de niveaux de gris au moyen du dégradé de niveaux de gris, déterminer (103) un premier nombre de gradients de niveaux de gris de la pluralité de gradients de niveaux de gris qui évoluent dans un premier sens à l'intérieur d'une première plage angulaire, déterminer (105) un second nombre de gradients de niveaux de gris de la pluralité de gradients de niveaux de gris qui évoluent dans un second sens à l'intérieur d'une seconde plage angulaire, et reconnaître (107) le caractère au moyen d'une relation entre le premier nombre de gradients de niveaux de gris et le second nombre de gradients de niveaux de gris, dans lequel, pour reconnaître (107) le caractère, le premier nombre et le second nombre sont mis en relation l'un avec l'autre pour obtenir la relation lorsque le code programme est exécuté sur un ordinateur.

9. Programme informatique pourvu d'un code programme stocké sur un support lisible par machine pour mettre en oeuvre un procédé permettant de distinguer la lettre O et le chiffre 0 dans la police ROC-B par reconnaissance d'un caractère qui présente un contour de caractère formé par un dégradé de niveaux de gris, comprenant les étapes consistant à déterminer (101) une pluralité de gradients de niveaux de gris au moyen du dégradé de niveaux de gris, déterminer (103) un premier nombre de gradients de niveaux de gris de la pluralité de gradients de niveaux de gris qui évoluent dans un premier sens à l'intérieur d'une première plage angulaire, déterminer (105) un second nombre de gradients de niveaux de gris de la pluralité de gradients de niveaux de gris qui évoluent dans un second sens à l'intérieur d'une seconde plage angulaire, et reconnaître (107) le caractère au moyen d'une relation entre le premier nombre de gradients de niveaux de gris et le second nombre de gradients de niveaux de gris, dans lequel, pour reconnaître (107) le caractère, le premier nombre et le second nombre sont mis en relation l'un avec l'autre pour obtenir la relation lorsque le code programme est exécuté sur un ordinateur.
